**Europäisches Patentamt**

**European Patent Office**

**Office européen des brevets**

(19)

(11) Publication number : **0 463 701 B1**

## (12) EUROPEAN PATENT SPECIFICATION

(45) Date of publication of patent specification :
**02.12.92 Bulletin 92/49**

(51) Int. Cl.[5] : **A22C 25/17**

(21) Application number : **91201601.1**

(22) Date of filing : **19.06.91**

(54) Apparatus for deskinning double fillets of fish.

(30) Priority : **22.06.90 NL 9001435**

(43) Date of publication of application :
**02.01.92 Bulletin 92/01**

(45) Publication of the grant of the patent :
**02.12.92 Bulletin 92/49**

(84) Designated Contracting States :
**BE DE DK FR GB IT NL SE**

(56) References cited :
**EP-A- 0 362 461**
**WO-A-86/03376**
**WO-A-87/00007**
**BE-A- 901 762**
**DE-A- 1 554 690**

(56) References cited :
**DE-A- 2 949 631**
**DE-A- 3 433 059**
**DE-B- 2 847 188**
**DE-B- 3 014 936**
**US-A- 1 936 688**
**US-A- 1 993 899**

(73) Proprietor : **Fieret, Maarten**
**Drostendijk 4**
**NL-3771 SB Barneveld (NL)**

(72) Inventor : **Fieret, Maarten**
**Drostendijk 4**
**NL-3771 SB Barneveld (NL)**

(74) Representative : **Kooy, Leendert Willem et al**
**OCTROOIBUREAU VRIESENDORP & GAADE**
**P.O. Box 266**
**NL-2501 AW The Hague (NL)**

EP 0 463 701 B1

## Description

The invention relates to an apparatus for deskinning double fillets of fish, comprising a conveyor device for carrying the fish divided into halves up to the dorsal fin root, the skin side of the fish facing away from the conveyor belt, a rotary drum arranged above the conveyor device and having a circumferential groove into which an endless cord projects so as to push the dorsal fin root into the groove, and a fillets-deskinning knife arranged between the drum and the conveyor device, the knife extending from the drum in the direction of discharge of the conveyor device.

The above-mentioned device is known from DE-B-30 14 936 and comprises two endless cords. Herrings are prepared for processing by prior art devices of this type and by cutting them at either side of the dorsal fin root up to the inner side of the skin. Subsequently, into each of both cuts one of both endless cords is pushed. A disadvantage of this method is that first of all an additional device is required to apply these cuts. In the second place, these cuts may not be sufficiently deep to separate the dorsal fin root from the fillets, while on the other hand the cuts may have damaged the skin to such an extent that removal of the skin is impossible or cannot properly be executed. Either case will result in unusable fish, i.e. waste.

Furthermore, it is known from BE-A-901.762 that the dorsal fin root of a fish divided into halves up to the dorsal fin root can be pushed into a groove by a thickening around a roller, said groove being arranged on an endless conveyor belt. Following the end roller at the discharging end part of the conveyor belt a rotary drum is arranged having a groove for receiving the dorsal fin root, the skin of the fish being in contact first with the conveyor belt and next with the drum and being cut off from the fillets by a knife following the drum. An objection to this feature of the above application concerns the clearance existing between the end roller of the conveyor belt and the drum, as seen with respect to the conveying surface of the conveyor belt, said clearance having too large a size to be passed by the fish. Apart from that, after having passed the thickening on said roller, the dorsal fin root is freely movable upwards in relation to firstly the conveyor belt and secondly the drum, and consequently the dorsal fin root's position is insufficiently fixed to guarantee that the deskinning is properly executed.

In order to remove these objections the invention is characterized by a pressure means arranged above the part of the conveyor device preceding the drum, thus the pressure means being arranged above the cord so as to press the dorsal fin root against the cord, wherein the cord must be sufficiently thick to divide the double fillets of a fish into two separate parts and to separate them from the dorsal fin root.

In this way, the cord presses against the dorsal fin root which is kept in its place by the pressure means, so that the cord moves into a position between both fillets of a fish in its attempt to push the dorsal fin root away. Surprisingly, no knife cuts are required thanks to the weak cohesion of the fish between the dorsal fin root and each of the fillets.

Another important advantage of the invention with the single cord is that it results in a less complex device, which is easier to clean than the prior art devices having more than one single cord.

The reason why the device as shown in the above-mentioned DE-B-30 14 936 comprises more than one cord is that two cords are necessary in order to have a cord slide into each cut between the dorsal fin root and the adjacent fillet. The invention has made this extra cord redundant, as one single cord proves to be able to push the dorsal fin root upwards against the pressure means, separating both the fillets from each other.

Moreover, it is known that devices similar to the above type (vide for instance the above BE-A-901.762) need water to wash away the skins and the dorsal fin roots. After that, the water must be filtered to clear it from the skins and the dorsal fin roots, yet after filtering the water still contains fat and waste matter so that it is too heavily polluted to discharge it without any further treatment. The fat in the water is due to the water-solubility of the fat on the skins and dorsal fin roots contacting with the water.

Usually such a device can process e.g. 100 herrings per minute, or 6000 herrings per hour, which results in 200 kgs of skins per hour. To discharge such an amount of skins 6000 to 10 000 litres of water per hour is required, so that a very large filter device is necessary to separate the skins from the water, yet afterwards a considerable amount of waste matter remains in the water which is not allowed to be discharged anywhere for environmental reasons.

In order to remove these objections the invention is preferably characterized in that a hood is formed and arranged between the drum and the adjacent rear end of the knife in such a way that the removed skin and dorsal fin root are sucked into the hoot by depressurized air for further passage through a discharge pipe connected to the hood to discharge air, skins and dorsal fin roots.

According to the invention an amount of water is sprayed which is just sufficient to moisten the skins adequately so as to facilitate their passage through the hood and the discharge pipe connected thereto by means of depressurized air. For that purpose 60 litres of water per hour suffices, thus only 1%, or even less, of the amount of water which is required to wash away waste skins according to prior art devices.

Moreover, the skins as moistened according to the invention are converted in their moistened state to fishmeal, so that there will be no waste water whatsoever.

In addition to that, discharge by depressurized air also leads to a higher quality of herring fillets when processing the fatter kinds of herring, such as young herring.

Another prior art device (vide DE-A-34 33 059) comprises a third cord for pulling the already removed skins away from the drum. The invention makes this feature redundant as well, as the skins are sucked from the drum by means of the hood according to the invention.

The remaining subclaims as from claim 3 also offer new and valuable features of the herein described invention.

At this point, the invention will be further elucidated in the following description of an embodiment as illustrated by the enclosed drawing, in which:

figure 1 shows a schematic cross-section of a fish in the state prior to the processing according to the invention, in which for the sake of clarity the skin and the dorsal fin root as well as both fillets are drawn as being already separated from each other, yet in fact they are still mutually connected;

figure 2 shows a schematic cross-section of the fish in the state immediately after it passed the edge of the knife;

figure 3 shows a three-dimensional view of the major parts of the invented device.

In an installation which is known per se, and therefore neither illustrated nor discussed in this context, head, tail, and stomach are cut off from fish such as herring. Next the entrails and the bones are removed after the headless, tailless and stomachless remaining part of the fish has been divided from the bottom of its belly up to the dorsal fin root into halves which are held together by the skin only.

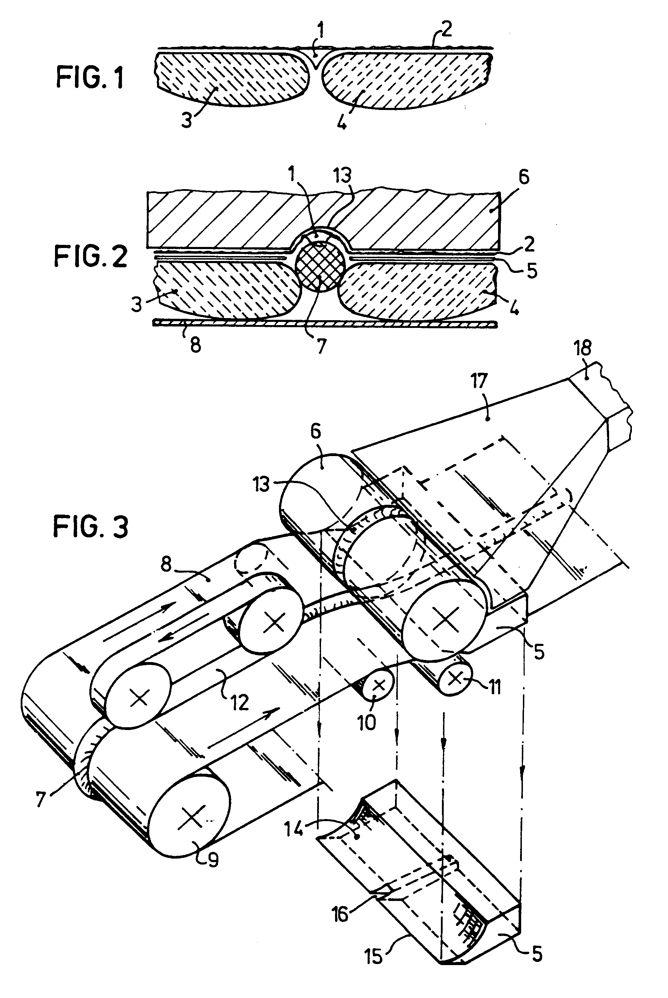

Figure 1 shows a schematic cross-section of the result of the above-described preparations, that is to say a cross-section of what remains after head, tail, stomach, entrails and bones have been removed from the fish. Moreover, the remaining part is flattened, as the fish is cut through from the bottom of its belly up to the dorsal fin root 1. The dorsal fin root 1 is naturally connected to the skin 2, to which two fillets 3 and 4 are naturally connected. For the sake of clarity the skin 2 and the dorsal fin root 1 as well as both fillets 3 and 4 are drawn in figure 1 as being separated from each other, yet they are in fact still mutually connected at this stage of processing. For the sake of convenience the product according to figure 1 may be called double fillet.

The double fillet described above with reference to figure 1 is put on a conveyor belt 8 as shown in figure 3. Figure 2 shows a cross-section of this conveyor belt 8 and part of it is shown three-dimensionally in figure 3. This single belt conveyor is a flexible, possibly transversely elastic, endless conveyor belt which is known per se and is running along two end rollers, one end roller of which being driven to move the conveyor belt in the direction of the arrow in figure 3. However, only one of both end rollers is indicated in figure 3 as being end roller 9, as the other end roller happens to be a similar one which is not novel and therefore the latter simply has not been drawn. In addition to that, the conveyor belt 8 is supported by supporting rollers, two supporting rollers 10 and 11 of which are drawn and serve to keep the conveyor belt 8 at the appropriate height.

According to figure 3 a cord 7 extends endlessly along the conveyor belt 8 and may be a separate part related to the conveyor belt, the cord moving synchronously with the conveyor belt. The conveyor belt 8 is arranged in between the cord 7 and all the end rollers and supporting rollers of the conveyor belt.

Figure 3 also shows that above the cord 7 a pressure means is arranged in the shape of, for example, an endless belt 12 extending along reversing rollers and being moved synchronously with the cord 7 in the same direction.

Downstream the conveyor belt 8, behind the pressure belt 12, a drum 6 is arranged above the conveyor belt. This drum is provided with a roughened circumference and a groove 13 into which the cord 7 can project when passing the drum 6. The drum is rotated synchronously with the cord 7 and the conveyor belt 8.

Also downstream the conveyor belt 8, behind the drum 6, a knife 5 is arranged above the conveyor belt, as is shown in figure 3. For the sake of clarity figure 3 shows the knife 5 as being removed from the apparatus as well. The knife has a concave surface 14 which is complementary to the shape of the convex surface of the drum 6, the distance between them being nearly as small as the thickness of the skin of a fish. The cutting edges 15 of the knife are preferably straight and extend parallel to the center line of the drum 6. Furthermore, the knife is provided with a tunnel 16 at its lower side facing the conveyor belt, through which the cord 7 can extend when passing the knife.

Above the knife 5 a hood 17 is arranged according to figure 3, the mouth of the hood abutting against the drum 6 as far as possible without blocking the rotation of the drum. To the hood 17 a discharge pipe 18 is connected to discharge air, skins and dorsal fin roots into an installation for sucking air and discharging skins and dorsal fin roots. This installation is no part of the invention, and therefore it is neither illustrated nor discussed in this respect.

The above-discussed and illustrated apparatus operates as follows. A fish prepared as a double fillet, as has already been discussed with reference to figure 1, is put on the conveyor belt with its skin side facing away from the conveyor belt 8 by way of means which are known and therefore neither illustrated nor discussed in this context. In this way, the dorsal fin root 1 is positioned on top of and parallel to the cord 7. The synchronously moving conveyor belt 8 and the cord cause the double fillet to move underneath the pressure belt 12 moving synchronously with the cord 7 and the conveyor belt 8. The distance between the pressure belt 12 and the cord 7 is so small that the pressure belt presses the double fillet down with the dorsal fin root 1 against the cord 7, resulting in both fillets 3 and 4 being separated from the dorsal fin root 1.

While figure 1 shows a cross-section of the double fillet in which in fact both fillets 3 and 4 are connected to the dorsal fin root 1 and the skin 2, figure 2 shows a state of the fish processing caused by pressure belt 12, in which the dorsal fin root 1 is pushed upwards by the cord 7 which also pushes both fillets 3 and 4 sidewards, resulting in both fillets being separated from the dorsal fin root merely by moving the double fillet according to figure 1 downwards with respect to the cord 7. In this way no cuts have to be made between between either fillet 3 or 4 and the dorsal fin root 1, which saves an additional cutting means. Therefore, it can be concluded surprisingly that the natural cohesion between the dorsal fin root 1 and both fillets 3 and 4 appears to be sufficiently weak to be torn merely by the pressure of a cord having sufficient thickness, e.g. 10 mm.

Subsequently, the double fillet is passed by the moving conveyor belt 8 and the cord 7, said cord 7 being arranged in between both fillets 3 and 4, underneath the drum 6. The cord 7 will partly project into the groove 13 in the drum, by which the dorsal fin root 1 is pressed into said groove. In this way, the cutting edges 15 of the knife penetrate between the skin 2 and both fillets 3 and 4, as is shown by figure 2. As a result the skin 2 is progressively cut off from the fillets 3 and 4 as the conveyor belt 8 and the cord 7 are moving and the drum 6 is rotating. After that, the removed skin 2 is passed by the roughened surface of the rotary drum 6 into the clearance between the drum and the concave surface 14 of the knife.

However, the fillets 3 and 4, being separated from the skin, remain on the moving conveyor belt 8 and are passed by the conveyor belt underneath the knife 5 to be further processed. This further processing is beyond the scope of the present invention. At this stage, both fillets 3 and 4 are separate parts and are lying as such at either side of the cord 7 on the conveyor belt 8. Besides, both fillets 3 and 4 are separated from the skin 2 without any excessive amount of water being used, resulting in a higher quality of fillets when processing, for example, the fatter kinds of herring such as young herring.

The skin lying between the drum 6 and the concave upper surface 14 of the knife will finally arrive at the mouth of the hood 17 as a result of the rotation of the drum. Due to the depressurized air applied in the hood 17 as well as in the discharge pipe 18 connected to it, the skin is sucked from the drum 6 and is passed through the discharge pipe to an installation for sucking air through the hood and for discharging skins and dorsal fin roots.

Thanks to this way of sucking skins from the drum 6 by means of depressurized air, it is sufficient to moisten the skins in order to facilitate their passage through the pipe 18. After having been gathered without any removal of water, the moistened skins are further processed into, for instance, fishmeal. In this way, only 60 litres of water per hour suffices to moisten 200 kgs/hr of skins of 6000 herrings per hour, without leaving any waste water.

Usually it takes 6000 to 10 000 litres of water per hour to wash away the very same amount of skins. Thus, application of the invention requires only 1% or even less of that amount of water. Besides, it makes a large filter device for separating skins from water surperfluous and prevents the discharge of heavily polluted water. The fact of the matter is that the discharge of waste water containing fat caused by the processing of fish presents a problem for environmental reasons.

## Claims

1. Apparatus for deskinning double fillets (3, 4) of fish, comprising a conveyor device (8) for carrying the fish divided into halves up to the dorsal fin root (1), the skin (2) side of the fish facing away from the conveyor device (8), a rotary drum (6) arranged above the conveyor device (8) and having a circumferential groove (13) into which an endless cord (7) projects so as to push the dorsal fin root (1) into the groove (13), and a fillets-deskinning knife (5) arranged between the drum (6) and the conveyor device (8), the knife (5) extending from the drum (6) in the direction of discharge of the conveyor device (8), **characterized** by a pressure means (12) arranged above the part of the conveyor device (8) preceding the drum (6), thus the pressure means (12) being arranged above the cord (7) so as to press the dorsal fin root (1) against the cord (7), wherein the cord (7) must be sufficiently thick to divide the double fillets (3, 4) of a fish into two separate parts and to separate them from the dorsal fin root (1).

2. Apparatus according to claim 1, **characterized** in that between the drum (6) and the adjacent rear end of the knife (5) a hood (17) is arranged and formed in such a way that the removed skin (5) and dorsal fin root (1) are sucked into the hood (17) by depressurized air for further passage through a discharge pipe (18) connected to the hood to discharge air, skins (2) and dorsal fin roots (1).

3. Apparatus according to claim 2, **characterized** in that no other cord than the aforesaid cord (7) is provided, said cord (7) extending and being moved along the conveyor device (8) which is a single belt conveyor.

4. Apparatus according to claim 3, **characterized** in that the cord (7) extends along the guide rollers (9, 10, 11) of the belt conveyor (8), the conveyor belt (8) being always arranged between the cord (7) and each of the guide rollers (9, 10, 11).

5. Apparatus according to claim 2, 3 or 4, **characterized** in that the pressure means (12) is an endless belt moving synchronously with the cord (7) and the conveyor belt (8).

6. Apparatus according to any of the preceding claims, **characterized** by a tunnel (16) in the side of the knife (5) facing the conveyor belt (8).

7. Apparatus according to any of the preceding claims, **characterized** in that the cutting edge (15) of the knife (5) is straight and extends parallel to the shaft of the drum (6) and the conveying surface of the conveyor belt (8).


**Patentansprüche**

1. Vorrichtung für das Enthäuten von Doppelfilets(3, 4) von Fischen, versehen von einem Förderer (8) zum Befördern des bis zu dem Rückenflossenhalter (1) in Hälften verteilten Fisches, der mit der Hautseite (2) von dem Förderer abgewandt (8) ist, von einem Drehtrommel (6) der über dem Förderer angeordnet (8) und von einer Umfangsnut (13), worin einen endlosen Riemen (7) hineinreicht um den Rückenflossenhalter (1) in die Nut (13) zu drücken, versehen ist und von einem Filet-Enthäutermesser (5) das zwischen dem Trommel (6) und dem Förderer (8) angeordnet ist und sich von dem Trommel aus in Abführrichtung des Förderers erstreckt (8) **gekennzeichnet durch** ein Druckmittel (12) das über den Teil des Förderers (8), der dem Trommel (6) stromaufwärts liegt, angeordnet ist, wobei das Druckmittel derart über dem Riemen (7) angeordnet ist, das es den Rückenflossenhalter (1) gegen den Riemen (7) drückt, wobei der Riemen (7) genügend dick sein muß um die Doppelfilets (3, 4) eines Fisches in zwei separate Teile zu trennen und sie von dem Rückenflossenhalter (1) zu trennen.

2. Vorrichtung nach Anspruch 1, **dadurch gekennzeichnet,** daß zwischen dem Trommel (6) und dem angrenzenden hinteren Ende des Messers (5) eine Ansaugekappe (17) derart angeordnet und gebildet ist, daß die entfernte Haut (5) und der Rückenflossenhalter (1) durch Unterdruck bis in die Ansaugekappe (17) hinein gesaugt werden zur weiteren Beförderung durch eine auf die Ansaugekappe angeschlossene Abführrleitung zum Abführen von Luft, Häute und Rückenflossenhalter.

3. Vorrichtung nach Anspruch 2, **dadurch gekennzeichnet,** daß kein anderer als der genannte Riemen (7) anwesend ist, wobei der Riemen (7) sich über den als Einzelbandförderer ausgeführten Förderer (8) erstreckt und angetrieben wird.

4. Vorrichtung nach Anspruch 3 **dadurch gekennzeichnet,** daß der Riemen (7) sich über die Leitrollen (9,10,11) des Bandförderers (8) erstreckt, wobei das Förderband (8) stets zwischen dem Riemen (7) und jeder Leitrolle (9,10,11) angeordnet ist.

5. Vorrichtung nach Anspruch 2, 3 oder 4, **dadurch gekennzeichnet,** daß das Druckmittel (12) ein endloses Band ist, das sich synchron mit dem Riemen (7) und dem Förderband (8) fortbewegt.

6. Vorrichtung nach einem der vorhergehenden Ansprüche **gekennzeichnet durch** einen Tunnel (16) in der dem Förderer (8) zugewandten Seite des Messers (5).

7. Vorrichtung nach einem der vorhergehenden Ansprüche **dadurch gekennzeichnet,** daß die Schneide (15) des Messers (5) recht ist und sich parrallel zur Trommelachse (6) und zur beförderenden Fläche des Förderbandes (8) erstreckt.


**Revendications**

1. Dispositif pour enlever la peau de doubles filets (3,4) de poissons, comprenant un transporteur (8), pour acheminer le poisson, divisé en moitiés, jusqu'à la racine de la nageoire dorsale (1), le côté du poisson présentant la peau (2) étant éloigné du transporteur (8), un tambour rotatif (6) disposé au-dessus du transporteur (8) et présentant une gorge circonférentielle (13), dans laquelle une corde continue (7) fait saillie, de façon à pousser la racine de la nageoire dorsale (1) à l'intérieur de la gorge (13), et un couteau (5) d'enlèvement de la peau des filets, disposé entre le tambour (6) et le transporteur (8), le couteau (5) s'étendant du tambour (6) en direction de l'évacuation du transporteur (8), caractérisé par un moyen de pressage (12), disposé au-dessus de la partie du transporteur (8) qui précède le tambour (6), le moyen de pressage (12) étant ainsi placé au-dessus de la corde (7), de manière à presser la racine de la nageoire dorsale (1) contre la corde (7), la corde (7) étant suffisamment épaisse pour diviser les doubles filets (3,4) de poisson en deux pièces dictinctes et pour les séparer de la racine de nageoire dorsale (1).

2. Dispositif selon la revendication 1, caractérisé en ce que, entre le tambour (6) et l'extrémité arrière adjacente du couteau (5), est disposé un capot (17) formé de telle façon que la peau enlevée (5) et la racine de la nageoire dorsale (1) soient aspirées dans le capot (17) à l'aide du vide, afin de passer ensuite dans un tube d'évacuation (18), relié au capot, pour évacuer l'air, les peaux (2) et les racines de nageoires dorsales (1).

3. Dispositif selon la revendication 2, caractérisé en ce qu'aucune autre corde que la corde (7) précitée n'est prévue, ladite corde (7) étant déplacée et s'étendant sur le transporteur (8), constitué par un transporteur à courroie simple.

4. Dispositif selon la revendication 3, caractérisé en ce que la corde (7) s'étend sur les rouleaux de guidage (9,10,11) du transporteur à courroie (8), la courroie de ce transporteur (8) étant en permanence disposée entre la corde (7) et chacun des rouleaux de guidage (9,10,11).

5. Dispositif selon les revendications 2, 3 ou 4, caractérisé en ce que le moyen de pressage (12) est une courroie continue, se déplaçant en synchronisme avec la corde (7) et la courroie du transporteur (8).

6. Dispositif selon l'une quelconque des revendications précédentes, caractérisé par un tunnel (16) ménagé dans le côté du couteau (5), face à la courroie du transporteur (8).

7. Dispositif selon l'une quelconque des revendications précédentes, caractérisé en ce que le bord de coupe (15) du couteau (5) est rectiligne et s'étend parallèlement à l'arbre du tambour (6) et à la surface de transport de la courroie du transporteur (8).

FIG. 1

FIG. 2

FIG. 3